# EUROPÄISCHE PATENTSCHRIFT

(11) **EP 1 736 257 B1**
(45) Veröffentlichungstag und Bekanntmachung des Hinweises auf die Patenterteilung: **29.07.2009**
(21) Anmeldenummer: 06009722.7
(22) Anmeldetag: 11.05.2006
(51) Int. Cl.: B22D 11/055

(54) **Flüssigkeitsgekühlte Kokille zum Stranggiessen von Metallen**
Fluid cooled mould for continuous casting of metals
Moule refroidi par liquide pour la coulée continue de métaux

(30) Priorität: 07.06.2005 DE 102005026329
(43) Veröffentlichungstag der Anmeldung: 27.12.2006
(73) Patentinhaber: KME Germany AG & Co. KG, 49074 Osnabrück (DE)
(72) Erfinder: Wobker, Hans-Günter, 49565 Bramsche (DE); Hugenschütt, Gerhard, 49191 Belm (DE); Rolf, Thomas, 49086 Osnabrück (DE)
(74) Vertreter: Pietrzykowski, Anja

(56) Entgegenhaltungen:
- EP-A1- 1 398 099
- US-A- 5 207 266
- US-B2- 6 742 571

## Beschreibung

Die Erfindung betrifft eine flüssigkeitsgekühlte Kokille zum Stranggießen von Metallen gemäß den Merkmalen im Oberbegriff des Patentanspruchs 1. Eine derartige Kokille ist aus der DE 102 37 472 A1 bekannt. Bei der Anwendung derartiger Kokillenplatten in Stranggussanlagen kann es aufgrund des hohen Wärmeangebots aus dem Gießprozess bei bestimmten Prozessparametern zu unerwartet hohen lokalen thermischen Belastungen kommen.

Zum Stand der Technik sind auch die US 5,207,266 A und US 6,742,571 B2 zu nennen, die jeweils Kokillenplatten offenbaren, in welche Kühlnuten eingearbeitet sind. Die Kühlnuten können einen gewissermaßen wellenlinienförmigen Verlauf haben und sind in ihrem Verlauf an die Lage von Befestigungspunkten sowohl in der Breite und Tiefe angepasst.

Weiterhin wird in der WO 03/092931 eine Kokille beschrieben, bei welcher die geometrische Ausgestaltung eines Kühlkanals entlang seines Verlaufs variiert, wobei der Kühlkanal zusätzlich mit Nuten oder Riefen versehen sein kann.

Der Erfindung die Aufgabe zugrunde, eine flüssigkeitsgekühlte Kokille der eingangs genannten Art hinsichtlich des Wärmeübergangs zu verbessern, um thermischen Überlastungen vorzubeugen und um die Lebensdauer zu erhöhen.

Diese Aufgabe ist bei einer flüssigkeitsgekühlten Kokille mit den Merkmalen des Patentanspruchs 1 gelöst.

Vorteilhafte Weiterbildungen des Erfindungsgedankens sind Gegenstand der Unteransprüche.

Zur lokalen Erhöhung der Kühlwirkung der flüssigkeitsgekühlten Kokille wird vorgeschlagen, dass die Kühlmittelseite bereichsweise zwischen zwei benachbarten Plateausockeln angeordnete, in den Kühlmittelspalt ragende Kühlrippen aufweist.

Zur lokalen Erhöhung der Kühlwirkung der flüssigkeitsgekühlten Kokille wird vorgeschlagen, dass die Kühlmittelseite bereichsweise zwischen zwei benachbarten Plateausockeln angeordnete, in den Kühlmittelspalt ragende Kühlrippen aufweist.

Kühlrippen im Sinne der Erfindung sind stegartige Erhebungen, die in die gleiche Richtung wie die Plateausockel weisen. Die Kühlrippen ragen in den Kühlmittelspalt, d.h. sie sind, ebenso wie die Plateausockel, gegenüber der Kühlmittelseite erhaben. Die Höhe der Kühlrippen und damit die Kontaktfläche mit dem Kühlmittel lässt sich dadurch erhöhen, dass zwischen zwei Kühlrippen eine in die Kühlmittelseite eingebrachte Nut angeordnet wird. Auf diese Weise kann der durch die Kühlrippen verkleinerte Strömungsquerschnitt zumindest teilweise wieder vergrößert werden, so dass auch ohne Reduzierung des Strömungsquerschnitts eine verbesserte Kühlwirkung in dem mit Kühlrippen versehenen Bereich erzielt wird.

Hierzu weisen die Kühlrippen einen schlangenlinienförmigen Verlauf auf. Durch die hierbei erzielte zumindest bereichsweise Abwinklung oder den Verlauf in Bögen können zusätzlich Strömungsturbulenzen erzeugt werden, die den Wärmeübergang zwischen der Kühlmittelseite der Kokillenplatte und dem Kühlmittel verbessern. Schlangenlinienfiörmige Kühlrippen haben den Vorteil, dass sie in ihrem Verlauf an die Kontur der stromlinienförmigen Plateausockel angepasst sind.

Grundsätzlich wird jedoch angestrebt, den Strömungsquerschnitt zu verringern mit dem Ziel, die Strömungsgeschwindigkeit des Kühlmittels zu erhöhen. Daraus ergibt sich ein lokal verbesserter Wärmeübergang von der Kokillenplatte in das Kühlmittel und damit eine verbesserte Kühlung der Kokille in diesem Bereich. Zudem wird durch die Kühlrippen die Kühlfläche in diesen Bereichen vergrößert, wodurch sich ebenfalls eine verbesserte Kühlung ergibt.

Durch die verbesserte Kühlung ist es möglich, die Plattenstärke der Kokillenplatte in diesem Bereich zu reduzieren. Daraus resultiert ein geringerer Abstand zwischen der der Schmelze zugewandten, sogenannten Heißseite und dem Kühlmittel. Der Strömungsquerschnitt selbst wird durch die Reduzierung der Plattenstärke nicht eingeengt, d.h. die Breite des Kühknittelspalts bleibt gleich. Querschnittsveränderungen ergeben sich einzig durch die vorgesehenen Kühlrippen, durch welche das Temperaturniveau in dieser dickenreduzierten Zone gesenkt wird.

Die Kühlrippen sind, insbesondere im Bereich des Badspiegels der Kokille angeordnet, da hier erfahrungsgemäß die höchsten thermischen Belastungen auftreten.

Grundsätzlich sind die Kühlrippen so zu bemessen, dass die Druckverluste innerhalb des Kühlmittelspalts nicht zu groß werden. Bei einem zu hohen Druckverlust besteht die Gefahr, dass es zu Bildung von Dampfblasen kommt, wodurch der Wärmetransport erheblich verschlechtert ist. Weiter besteht die Gefahr, dass es bei einem zu hohen Druckverlust zur Reduzierung der Kühlmittelmenge, d.h. des Volumenstroms kommt. Der Volumenstrom kann aufgrund eines vorgegebenen maximalen Drucks nicht beliebig erhöht werden.

Grundsätzlich ist es möglich, die Kühlrippen parallel zur Strömungsrichtung des Kühlmittels innerhalb des Kühlmittelspalts anzuordnen.

Einander benachbarte Kühlrippen bzw. von Kühlrippen und benachbarten Plateausockeln ausgebildete Strömungskanäle besitzen in vorteilhafter Ausgestaltung des Erfindungsgedankens einen über die Längserstreckung der Kühlrippen gleich bleibenden Querschnitt, um die Druckverluste innerhalb der Strömungskanäle zu begrenzen.

In vorteilhafter Weiterbildung können die Plateausockel in Vertikalreihen fluchtend und in Horizontalreihen fluchtend angeordnet sein, wobei die Plateausockel zwei aufeinander folgender Horizontalreihen in Horizontalrichtung zueinander versetzt angeordnet sind. Dadurch wird ein teilweiser Ausgleich für die durch die Kühlrippen entstehenden höheren Druckverluste des Kühlmittels geschaffen. Bei einer Anordnung der Plateausockel in Horizontal- und Vertikalreihen, ohne dass aufeinander folgende Horizontalreihen zueinander versetzt sind, ergibt sich ein pulsierender Kühlmittelstrom, da der Kühlmittelstrom in Strömungsrichtung wiederkehrende Querschnittsverengungen und Querschnittsverbreiterungen erfährt. Dieser unerwünschte Effekt kann dadurch verringert werden, dass die Plateausockel aufeinander folgender Horizontalreihen in Horizontalrichtung zueinander versetzt angeordnet werden. Das Pulsieren des Kühlmittelstroms ist am geringsten, wenn die Plateausockel zwei aufeinander folgende Horizontalreihen um den halben Horizontalabstand einander benachbarter Plateausockel zueinander vesetzt angeordnet sind. Bei einer solchen Anordnung ist auch der Strömungswiderstand am geringsten.

Die Erfindung wird nachfolgend anhand zweier in den Zeichnungen dargestellten Ausführungsbeispiele erläutert.

Es zeigen:
- Figur 1: in perspektivischer Darstellung die rückwärtige Ansicht einer ersten Ausführungsform einer Kokillenplatte in Blickrichtung auf die Plateausockel;
- Figur 2: entsprechend der Darstellung der Figur 1 eine weitere Ausführungsform einer solchen Kokillenplatte;
- Figur 3: einen vergrößerten Ausschnitt der Kokillenplatte der Figur 1 und
- Figur 4: einen vergrößerten Ausschnitt der Kokillenplatte der Figur 2.

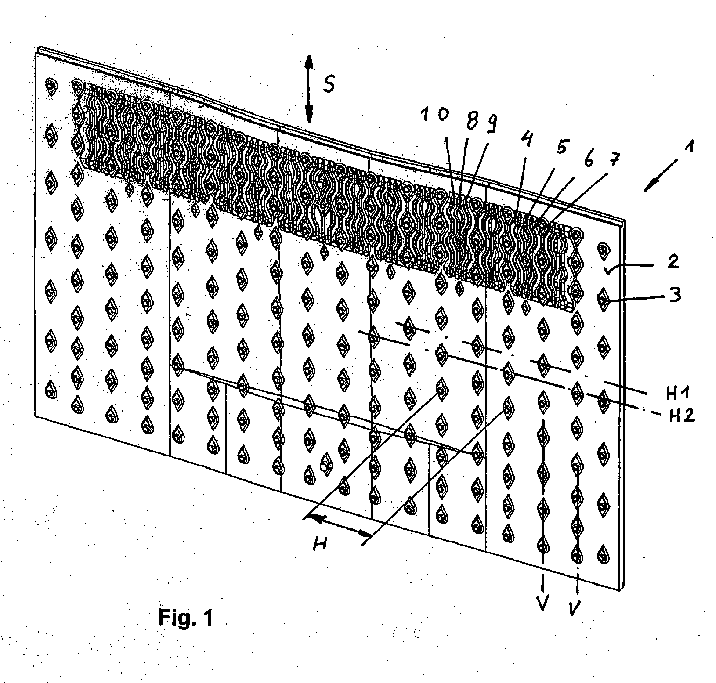

Figur 1 zeigt eine Kokillenplatte 1, die an einer nicht näher dargestellen Adapterplatte befestigt wird. Die Kokillenplatte 1 und die Adapterplatte bilden eine Platteneinheit einer nicht näher dargestellten flüssigkeitsgekühlten Kokille zum Stranggießen von Metallen. Die Kokillenplatte 1 besteht aus Kuper oder eine Kupferlegierung, vorzugsweise mit einer Dehngrenze von >350 Mpa, wobei die Festigkeit grundsätzlich auch geringer sein kann. Die Kokillenplatte 1 weist eine ungleichmäßige Wandstärke auf. Alternativ besitzt die Kokillenplatte über ihre gesamte Erstreckung eine gleich bleibende Wandstärke.

Zur Kühlung der Kokillenplatte 1 mit Kühlmitteln ist ein Kühlmittelspalt zwischen der Kokillenplatte 1 und der Adapterplatte vorgesehen, der in seiner Höhe durch über die Kühlmittelseite 2 vorstehende Plateausockel 3 bestimmt ist. Die Plateausockel 3 besitzen eine im Wesentlichen rautenförmige Konfiguration und sind damit strömungstechnisch günstig an die Strömungsrichtung S des Kühlmittels angepasst. Die Plateausockel 3 sind in diesem Ausführungsbeispiel einstückig mit der Kokillenplatte 1 ausgebildet.

Wesentlich ist, dass bei der erfindungsgemäßen Kokillenplatte 1 an der Kühlmittelseite bereichsweise zwischen benachbarten Plateausockeln 3 angeordnete Kühlrippen 4, 5, 6 angeordnet sind. Die Kühlrippen 4, 5, 6, 7 erstrecken sich im Wesentlichen in Strömungsrichtung S des Kühlmittels und sind im Bereich des Badspiegels der Metallschmelze angeordnet. In diesem Ausführungsbeispiel erstrecken sich die Kühlrippen 4, 5, 6, 7 über einen Höhenbereich von drei Plateausockeln umfasst. Die Kühlrippen 4, 5, 6, 7 sind zwar grundsätzlich in Strömungsrichtung S ausgerichtet, allerdings verlaufen sie schlangenlinienförmig, d.h. sie weisen mehrere Bögen auf. Die Position der Bögen ist an die Anordnung der Plateausockel 3 angepasst. Dadurch ergeben sich Strömungskanäle 8, 9, 10 mit gleich bleibendem Querschnitt. Die Strömungskanäle 8, 9, 10 werden sowohl von einander benachbarten Kühlrippen 4, 5,-6, 7 gebildet, als auch von Kühlrippen 4, 5, 6, 7 an benachbarten Plateausockeln 3.

Es ist erkennbar, dass die Plateausockel 3 in Vertikalreihen V fluchtend sowie in Horizontalreihen H1, H2 fluchtend angeordnet sind. Die Plateausockel 3 zweier aufeinander folgender Horizontalreihen H1, H2 sind in Horizontalrichtung zueinander versetzt angeordnet. In diesem Ausführungsbeispiel sind die Plateausockel der Horizontalreihen H1 und H2 um den halben Horizontalabstand H zueinander versetzt angeordnet.

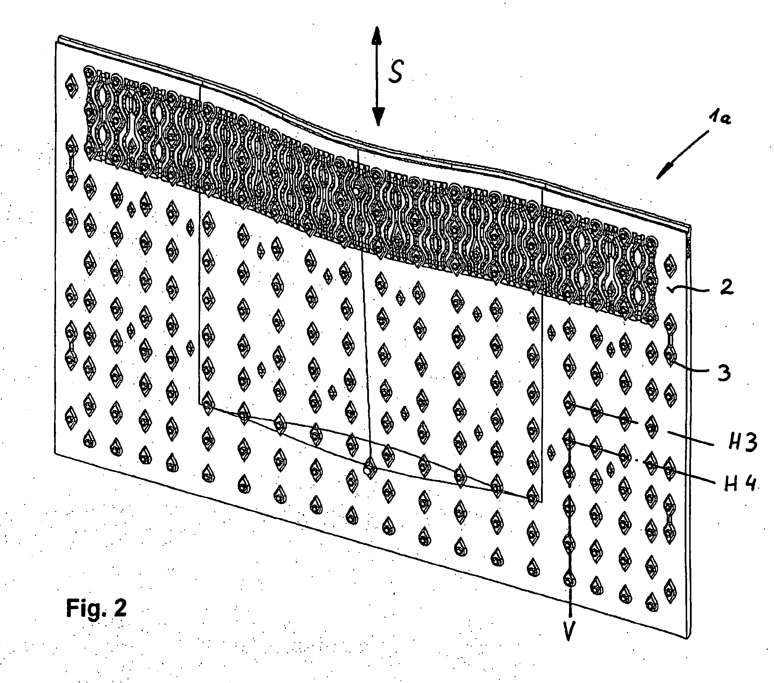

Die Kokillenplatte 1 a der Figur 2 entspricht im Wesentlichen derjenigen der Figur 1 mit dem Unterschied, dass die Plateausockel 3 zweier aufeinander folgende Horizontalreihen H3, H4 nicht in Horizontalrichtung zueinander versetzt sind.

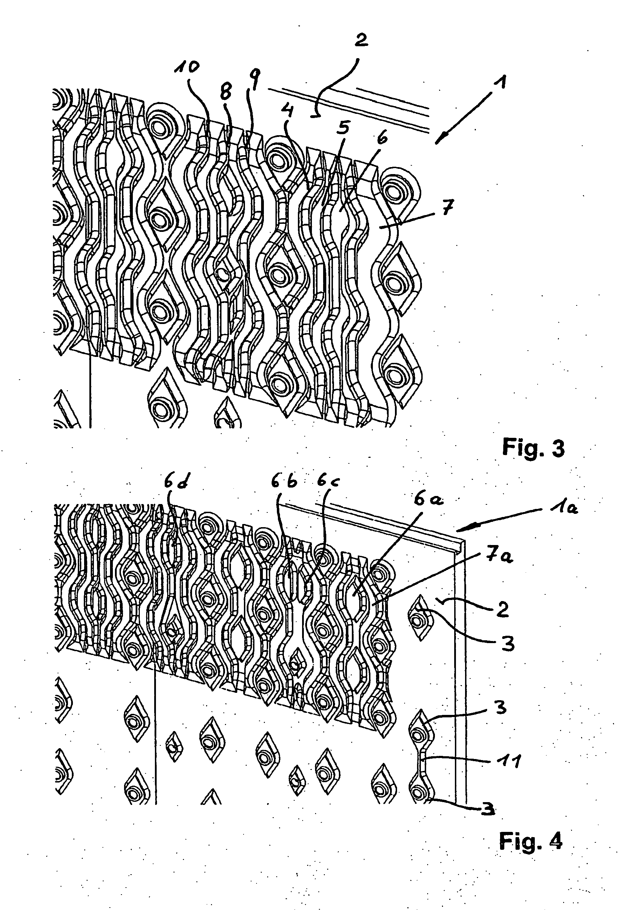

Figur 3 zeigt einen vergrößerten Ausschnitt des mit Kühlrippen 4, 5, 6, 7 versehenen Bereichs der Kokillenplatte 1, aus dem der Verlauf der Kühlrippen 4, 5, 6, 7 und der Strömungskanäle 8, 9, 10 deutlicher hervorgeht. Es ist erkennbar, dass die Breite der unterschiedlichen Strömungskanäle 8, 9, 10 über ihre gesamte Länge im Wesentlich konstant ist, während die Breite der Kühlrippen 4, 5, 6, 7 in ihrer Längserstreckung durchaus variieren kann und sich inselförmige Bereiche einer Kühlrippe ergeben können, die besonders gut anhand der Figur 4 zu erkennen sind.

Aufgrund der andersartigen Anordnung der Plateausockel 3 in Figur 4 ergibt sich auch ein anderes Muster von Kühlrippen und Strömungskanälen, wobei je nach horizontalem Abstand zweier Plateausockel zwei bis vier Kühlrippen nebeneinander angeordnet sind, die sich in ihrer Längserstreckung verdicken und verjüngen. Die Kühlrippen weisen in diesem Ausführungsbeispiel unterschiedliche Längen auf. Am besten ist dies anhand der Kühlrippen 6a und 7a zu erkennen. Die Kühlrippe 6a hat eine ähnliche Kontur wie ein Plateausockel 3 und ist daher wesentlich kürzer als die benachbarte Kühlrippe 7a. Etwa auf gleicher Höhe wie die Kühlrippe 6a befinden sich zwei weitere Kühlrippen 6b, 6c, die in ihrer Gesamtkontur etwa der sockelartigen Kühlrippe 6a entsprechen, allerdings in Strömungsrichtung mittig geteilt sind, so dass sich zwischen den Kühlrippen 6b, 6c ein Strömungskanal befindet. Etwas weiter in der Bildebene links ist eine wesentlich schmalere plateausockelartige Kühlrippe 6d zu erkennen. Die genaue Kontur der jeweiligen Kühlrippen bzw. Strömungskanäle ergibt sich aus den strömungstechnischen Anforderungen und ist individuell an die jeweilige Kokillenplatte, d.h. im Wesentlichen an die Anordnung der Plateausockel 3 angepasst.

In der Bildebene rechts ist zu erkennen, dass zwei Plateausockel 3 in Strömungsrichtung, d.h. in Vertikalrichtung hintereinander liegend durch eine sich in Strömungsrichtung erstreckende Kühlrippe 11 miteinander verbunden sind.

### Bezugszeichen:

- 1: - Kokillenplatte
- 1a: - Kokillenplatte
- 2: - Kühlmittelseite v. 1
- 3: - Plateausockel
- 4: - Kühlrippe
- 5: - Kühlrippe
- 6: - Kühlrippe
- 6a: - Kühlrippe
- 6b: - Kühlrippe
- 6c: - Kühlrippe
- 6d: - Kühlrippe
- 7: - Kühlrippe
- 7a: - Kühlrippe
- 8: - Strömungskanal
- 9: - Strömungskanal
- 10: - Strömungskanal
- 11: - Kühlrippe

- H: - Horizontalabstand zw. 3
- H1: - Horizontalreihe
- H2: - Horizontalreihe
- H3 -: Horizontalreihe
- H4 -: Horizontalreihe
- S: - Strömungsrichtung
- V: - Vertikalreihe

## Patentansprüche

1. Flüssigkeitsgekühlte Kokille zum Stranggießen von Metallen, umfassend Kokillenplatten (1, 1a) aus Kupfer oder einer Kupferlegierung, die mittels Befestigungsbolzen jeweils mit einer Adapterplatte oder einem Wasserkasten verbunden werden, wobei die Befestigungsbolzen an aus der Kühlmittelseite (2) inselartig hervorstehenden Plateausockeln (3) befestigt sind, welche in einen zwischen der Kokillenplatte (1, 1a) und der Adapterplatte bzw. dem Wasserkasten ausgebildeten Kühlmittelspalt ragen und welche eine an die Strömungsrichtung (S) des Kühlmittels angepasste stromlinienförmige Gestalt besitzen, **dadurch gekennzeichnet, dass** die Kühlmittelseite (2) bereichsweise zwischen zwei benachbarten Plateausockeln (3) angeordnete, in den Kühlmittelspalt ragende Kühlrippen (4, 5, 6, 6a-d, 7, 7a, 11) aufweist, wobei die Kühlrippen (4, 5, 6, 6a-d, 7, 7a) Längenabschnitte aufweise, die im Winkel zur Strömungsrichtung (S) stehen, wobei die Kühlrippen (4, 5, 6, 6a-d, 7, 7a) in ihrer Längserstreckung schlangenlinienförmig verlaufen und in ihrem Verlauf an die Plateausockel (3) angepasst sind.

2. Kokille nach Anspruch 1 oder 2, **dadurch gekennzeichnet, dass** die Kokillenplatte im Bereich der Kühlrippen (4, 5, 6, 6a-d, 7, 7a, 11) eine reduzierte Wandstärke aufweist.

3. Kokille nach Anspruch 2, **dadurch gekennzeichnet, dass** die Kühlrippen (4, 5, 6, 6a-d, 7, 7a, 11) derart bemessen sind, dass der Strömungsquerschnitt des Kühlmittelspalts in mit Kühlrippen (4, 5, 6, 6a-d, 7, 7a, 11) versehenen Bereichen dem Strömungsquerschnitt in Bereichen ohne Kühlrippen (4, 5, 6, 6a-d, 7, 7a, 11) entspricht.

4. Kokille nach Anspruch 2, **dadurch gekennzeichnet, dass** der Strömungsquerschnitt durch die Kühlrippen (4, 5, 6, 6a-d, 7, 7a, 11) reduziert ist.

5. Kokille nach einem der Ansprüche 1 bis 4, **dadurch gekennzeichnet, dass** die Kühlrippen (4, 5, 6, 6a-d, 7, 7a) im Höhenbereich des Badspiegels angeordnet sind.

6. Kokille nach einem der Ansprüche 1 bis 5, **dadurch gekennzeichnet, dass** die Kühlrippen parallel zur Strömungsrichtung (S) orientiert sind.

7. Kokille nach einem der Ansprüche 1 bis 6, **dadurch gekennzeichnet, dass** von einander benachbarten Kühlrippen (4, 5, 6, 6a-d, 7, 7a) und von Kühlrippen (4, 6) und benachbarten Plateausockeln (3) Strömungskanäle (8, 9, 10) mit in Strömungsrichtung gleich bleibendem Querschnitt ausgebildet sind.

8. Kokille nach einem der Ansprüche 1 bis 7, **dadurch gekennzeichnet, dass** die Plateausockel (3) in Vertikalreihen (V) fluchtend und Horizontalreihen (H1; H2) fluchtend angeordnet sind, wobei die Plateausockel (3) zweier aufeinander folgender Horizontalreihen (H1, H2) in Horizontalrichtung zueinander versetzt angeordnet sind.

9. Kokille nach einem der Ansprüche 1 bis 8, **dadurch gekennzeichnet, dass** die Plateausockel (3) zweier aufeinander folgender Horizontalreihen (H1, H2) um den halben Horizontalbstand (H) einander benachbarter Plateausockel (3) zueinander versetzt angeordnet sind.

## Claims

1. Liquid-cooled permanent mould for the continuous casting of metals, comprising mould plates (1, 1a) made of copper or a copper alloy, which are connected respectively to an adapter plate or a water tank by means of fastening bolts, the fastening bolts being fastened to plateau pedestals (3) which project in an insular manner from the coolant side (2) and project into a coolant gap formed between the mould plate (1, 1a) and the adapter plate or the water tank and which have a streamlined form adapted to the flow direction (S) of the coolant, **characterised in that** the coolant side (2) has cooling ribs (4, 5, 6, 6a-d, 7, 7a, 11) arranged in regions between two adjacent plateau pedestals (3) and projecting into the coolant gap, the cooling ribs (4, 5, 6, 6a-d, 7, 7a) having longitudinal portions, which are at an angle to the flow direction (S), the cooling ribs (4, 5, 6, 6a-d, 7, 7a) extending in the shape of a wavy line with respect to their longitudinal extension and being adapted with respect to their course to the plateau pedestal (3).

2. Permanent mould according to claim 1 or 2, **characterised in that** the mould plate has a reduced wall thickness in the region of the cooling ribs (4, 5, 6, 6a-d, 7, 7a, 11).

3. Permanent mould according to claim 2, **characterised in that** the cooling ribs (4, 5, 6, 6a-d, 7, 7a, 11) are dimensioned such that the flow cross-section of the cooling gap in regions provided with cooling ribs (4, 5, 6, 6a-d, 7, 7a, 11) correspond to the flow cross-section in regions without cooling ribs (4, 5, 6, 6a-d, 7, 7a, 11).

4. Permanent mould according to claim 2, **characterised in that** the flow cross-section is reduced by the cooling ribs (4, 5, 6, 6a-d, 7, 7a, 11).

5. Permanent mould according to any one of claims 1 to 4, **characterised in that** the cooling ribs (4, 5, 6, 6a-d, 7, 7a) are arranged at the height range of the bath level.

6. Permanent mould according to any one of claims 1 to 5, **characterised in that** the cooling ribs are oriented parallel to the flow direction (S).

7. Permanent mould according to any one of claims 1 to 6, **characterised in that** flow channels (8, 9, 10) with a cross-section remaining the same in the flow direction are formed by cooling ribs (4, 5, 6, 6a-d, 7, 7a) which are adjacent to one another and by cooling ribs (4, 6) and adjacent plateau pedestals (3).

8. Permanent mould according to any one of claims 1 to 7, **characterised in that** the plateau pedestals (3) are arranged aligned in vertical rows (V) and aligned in horizontal rows (H1, H2), the plateau pedestals (3) of two successive horizontal rows (H1, H2) being arranged offset with respect to one another in the horizontal direction.

9. Permanent mould according to any one of claims 1 to 8, **characterised in that** the plateau pedestals (3) of two successive horizontal rows (H1, H2) are arranged offset with respect to one another by half the horizontal spacing (H) of adjacent plateau pedestals (3).

## Revendications

1. Coquille de coulée continue de métaux, refroidie par un liquide et comprenant des plaques de coquille (1, 1a) en cuivre ou en un alliage de cuivre, reliées respectivement par des goujons de fixation à une plaque d'adaptateur ou à une chemise d'eau, les goujons de fixation sont fixés à des socles-plateaux (3) venant en saillie à la manière d'îlots par rapport au côté (2) tourné vers le fluide de refroidissement, ces socles ayant une forme de lignes aérodynamiques adaptée à la direction de passage (S) de l'agent de refroidissement,
**caractérisée en ce que**
le côté (2) exposé à l'agent de refroidissement comporte, par zones entre deux socles-plateaux (3) voisins, des nervures de refroidissement (4, 5, 6, 6a-d, 7, 7a, 11) venant en saillie dans l'intervalle traversé par l'agent de refroidissement,
les nervures de refroidissement (4, 5, 6, 6a-d, 7, 7a) ont des segments de longueur faisant un angle par rapport à la direction d'écoulement (S), les nervures de refroidissement (4, 5, 6, 6a-d, 7, 7a) ont, dans leur extension longitudinale, une forme serpentine et leur tracé est adapté aux socles-plateaux (3).

2. Coquille selon la revendication 1,
**caractérisée en ce que**
la plaque de coquille a une épaisseur de paroi réduite au niveau des nervures de refroidissement (4, 5, 6, 6a-d, 7, 7a, 11).

3. Coquille selon la revendication 2,
**caractérisée en ce que**
les nervures de refroidissement (4, 5, 6, 6a-d, 7, 7a, 11) sont dimensionnées pour que la section d'écoulement, dans l'intervalle traversé par l'agent de refroidissement avec les zones munies des nervures de refroidissement (4, 5, 6, 6a-d, 7, 7a, 11), corresponde à la section d'écoulement dans les zones sans nervure de refroidissement (4, 5, 6, 6a-d, 7, 7a, 11).

4. Coquille selon la revendication 2,
**caractérisée en ce que**
la section d'écoulement est réduite par les nervures de refroidissement (4, 5, 6, 6a-d, 7, 7a, 11).

5. Coquille selon l'une des revendications 1 à 4,
**caractérisée en ce que**
les nervures de refroidissement (4, 5, 6, 6a-d, 7, 7a) sont prévues à la hauteur du niveau du bain.

6. Coquille selon les revendications 1 à 5,
**caractérisée en ce que**
les nervures de refroidissement sont orientées parallèlement à la direction d'écoulement (S).

7. Coquille selon l'une des revendications 1 à 6,
**caractérisée en ce que**
des canaux d'écoulement (8, 9, 10), à section constante dans la direction d'écoulement, sont réalisés par les nervures de refroidissement voisines (4, 5, 6, 6a-d, 7, 7a) et les nervures de refroidissement (4, 6) et les socles-plateaux voisins (3).

8. Coquille selon les revendications 1 à 7,
**caractérisée en ce que**
les socles-plateaux (3) sont alignés en rangées verticales (V) et en rangées horizontales (H1, H2), les socles-plateaux de deux rangées horizontales (H1, H2) successives étant décalés dans la direction horizontale.

9. Coquille selon les revendications 1 à 9,
**caractérisée en ce que**
les socles-plateaux (3) de deux rangées horizontales (H1, H2) successives sont décalés du demi-intervalle horizontal (H) de socles-plateaux (3) voisins.
